# EUROPÄISCHE PATENTSCHRIFT

(11) **EP 2 251 257 B1**
(45) Veröffentlichungstag und Bekanntmachung des Hinweises auf die Patenterteilung: **25.02.2015**
(21) Anmeldenummer: 10159911.6
(22) Anmeldetag: 14.04.2010
(51) Int. Cl.: B29L 31/30, B63H 25/38, B29C 70/86

(54) **Ruderflosse**
Rudder flap
Aileron de gouvernail

(30) Priorität: 22.04.2009 DE 102009018176; 13.07.2009 DE 102009033163
(43) Veröffentlichungstag der Anmeldung: 17.11.2010
(73) Patentinhaber: becker marine systems GmbH & Co. KG, 21079 Hamburg (DE)
(72) Erfinder: Kuhlmann, Henning, 22559 Hamburg (DE)
(74) Vertreter: RGTH

(56) Entgegenhaltungen:
- EP-A2- 2 039 497
- DE-A1- 3 408 532
- FR-A1- 2 692 546
- SU-A1- 874 477

## Beschreibung

Die Erfindung betrifft ein Ruder, umfassend ein Ruderblatt und eine Flosse, für Wasserfahrzeuge, insbesondere Schiffe, an die hohe Anforderungen bezüglich ihrer Manövrierfähigkeit gestellt werden. Unter der Bezeichnung "hohe Anforderungen bezüglich ihrer Manövrierfähigkeit" werden im folgenden Schiffe verstanden, für die besonders hohe Ruderkräfte gefordert werden bzw. Schiffe, die Manöver bei geringer Fahrt, wie z.B. Anlegemanöver, ohne zusätzliche Unterstützung, z.B. durch Schlepper, durchführen müssen.

Ruder mit derartigen Flossen werden auch als "Flossenruder" bezeichnet. Hierbei handelt es sich zumeist um sogenannte Vollschweberuder, an deren Endleiste, d. h. an der in Schiffsfahrtrichtung gesehen hinteren Ruderleiste, eine bewegbare bzw. verschwenkbare Flosse mittels geeigneter Befestigungsmittel, bspw. Scharniere oder dergleichen, befestigt ist. Grundsätzlich können derartige bewegbare Flossen jedoch auch bei anderen Ruderarten, beispielsweise bei Halbschweberudern oder bei in der Stevensohle gelagerten Rudern, verwendet werden.

Die Flosse ist normalerweise angelenkt an dem Ruderblatt des Ruders ausgebildet, wobei die Auslenkung der Flosse mittels einer zwischen Schiffskörper und Flosse angeordneten Anlenkeinrichtung vorgebbar ist. Derartige Ruder sind häufig zwangsgesteuert ausgebildet, so dass beim Ruderlegen, d. h. beim Verschwenken des Ruderblattes um die Ruderschaftachse, die Flosse ebenfalls ausgelenkt wird. Hierdurch können mit Flossenrudern eine größere Propellerstrahlumlenkung und höhere Ruderkräfte erreicht werden, so dass sich im Vergleich eine verbesserte Manövrierbarkeit als bei herkömmlichen Rudern ergibt. Die Flosse ist daher mit dem Ruderblatt des Hauptruders schwenkbar, normalerweise mittels Scharnieren oder dergleichen, zu verbinden, und ist normalerweise im eingebauten Zustand um eine Vertikalachse bzw. um eine zur Endleiste des Ruderblattes parallelen Achse verschwenkbar.

Die Flossen sind normalerweise derart gestaltet, dass sie eine ähnliche Höhe wie das Ruderblatt und eine in Schiffsfahrtrichtung betrachtete Länge von etwa 1/3 bis 1/10 der Ruderblattlänge aufweisen. Daher können Flossen für große Schiffe, wie Containerschiffe oder Tanker, bei denen die Ruderblattfläche häufig 80 m2 und mehr beträgt, entsprechend große Ausmaße erreichen. Da Ruderflossen im Allgemeinen, ebenso wie Ruderblätter, aus Metall, insbesondere aus Stahl, hergestellt werden, weisen die Ruderflossen für große Schiffe ein entsprechend hohes Gewicht auf.

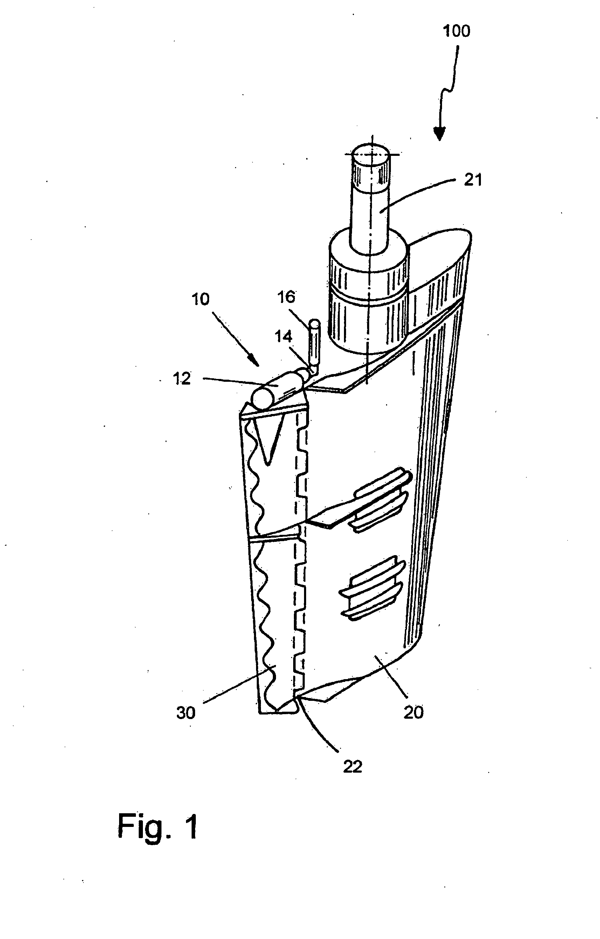

Fig. 1 zeigt beispielhaft eine perspektivische Ansicht eines Vollschweberuders 100 mit einer aus dem Stand der Technik bekannten, anlenkbaren Flosse 30. Das in Fig. 1 dargestellte Flossenruder umfasst ein Ruderblatt 20, das um einen Ruderschaft 21, der mit einer in einem Schiffskörper angeordneten Rudermaschine (hier nicht dargestellt) zu verbinden ist, drehbar ist. An der in Fahrtrichtung betrachteten hinteren Endleiste des Ruderblattes 20 ist eine verschwenkbare und zwangsgeführte, überwiegend aus Metall hergestellte Flosse 30 angeordnet, die mit einer als Gleitschwenkkolbenanlenkung ausgebildeten Anlenkeinrichtung 10 versehen ist. Die Anlenkeinrichtung 10 ist am oberen Endbereich der Flosse 30 sowie am unteren Ende des Skegs als festen Bestandteil der Schiffsstruktur (nicht dargestellt) angeordnet und umfasst ein Kreuzgelenk mit einem Scharnierbolzen 14 und den Lagergehäusen 12 und 16 von zugehörigen Horizontalkolben und Vertikalkolben (hier nicht dargestellt). Es ist erkennbar, dass die Anlenkeinrichtung 10 außerhalb der Ruderflosse bzw. des Ruderblattes 20 der Ruderflosse 30 angeordnet ist. Die Flosse 30 verläuft über die gesamte Höhe des Ruderblattes 20 und ist um die Endleiste 22 des Ruderblattes 20 schwenkbar angeordnet.

Grundsätzlich ist es vorteilhaft, Ruder bzw. Ruderflossen möglichst leicht auszubilden, um geringere Kräfte beim Ruderlegen aufbringen zu müssen, die Lagerung des Ruders entsprechend kleiner dimensionieren zu können, etc. Auf der anderen Seite treten jedoch bei Ruderflossen extrem hohe Ruderkräfte auf, die daher rühren, dass die Flosse einen größeren Winkel zum Propellerstrom aufweist als das Ruderblatt. Insbesondere im Verbindungsbereich zwischen Flosse und Ruderblatt treten äußerst hohe Kräfte auf, so dass das Material, aus dem die Flosse hergestellt ist, entsprechend biege- und verbindungssteif ausgebildet sein muss.

Aus Druckschrift FR 2 692 546 A1 ist ein Ruder mit einer Flosse bekannt, bei dem das Ruderblatt teilweise aus glasfaserverstärktem Kunststoff hergestellt ist, jedoch die Flosse weiterhin aus Metall besteht.

In Druckschrift DE 34 08 532 A1 wird eine Vorrichtung zur Verminderung des hydrodynamischen Widerstandes von Schiffskörpern behandelt. Dabei sind die Abströmteile von Rudern oder Flossen aus elastischem Werkstoff gefertigt, die sich dadurch der Strömung anpassen. Ein biegesteifer Faserverbundwerkstoff findet keine Anwendung.

Es ist Aufgabe der vorliegenden Erfindung, ein Ruder umfassend ein Ruderblatt und eine Flosse anzugeben, wobei die Flosse gegenüber dem aus dem Stand der Technik bekannten Flossen verbesserte Eigenschaften, insbesondere ein reduziertes Gewicht, und gleichzeitig eine ausreichende Stabilität bzgl. der auf die Ruderflosse wirkenden Ruderkräfte, aufweist.

Die der Erfindung zugrunde liegende Aufgabe wird durch ein Ruder mit den Merkmalen des Anspruchs 1 gelöst.

Bei der vorliegenden Erfindung handelt es sich demnach um ein Ruder für das Manövrieren von Schiffen mit hohen Anforderungen bezüglich der Manövrierfähigkeit umfassend ein Ruderblatt und eine Flosse. Dabei weist die Flosse des Ruders einen Flossenkörper auf, der zumindest teilweise aus biegesteifem Faserverbundwerkstoff besteht und der zumindest größtenteils die Außenoberfläche der Flosse bildet, wobei die Flosse angelenkt mittels einer Anlenkeinrichtung an dem Ruderblatt angeordnet ist, wobei die Flosse in einem oberen Flossenendbereich mindestens ein Aufnahme-/Gelenkelement zur Aufnahme eines Bauteils der Anlenkeinrichtung umfasst, und wobei das mindestens eine Aufnahme-/Gelenkelemente mindestens ein Rohr umfasst, um welches herum der Faserverbundwerkstoff gewickelt und/oder laminiert ist. Vorteilhaft ist hierbei, dass durch die Fertigung bzw. Herstellung des Flossenkörpers, zumindest bereichsweise, aus Faserverbundmaterial, das Gewicht der Ruderflosse erheblich reduziert und gleichzeitig eine ausreichende Stabilität bzw. Biege- und Verbindungssteifigkeit der Ruderflosse erhalten werden kann. Vorteilhafterweise wird insbesondere ein Kohlenstoff-Faserverbundwerkstoff verwendet. Es können auch faserverstärkte Kunststoffe und andere faserverstärkte Materialien verwendet werden. Als Kohlenstofffasern können insbesondere Graphitfasern zur Anwendung kommen. Der Vorteil der Verwendung von faserverstärkten Werkstoffen liegt in ihrem geringen Gewicht und ihrer hohen Steifigkeit und Festigkeit. Die Verwendung von Faserverbundmaterial zur Herstellung der Ruderflosse, auf die extrem hohe Ruderkräfte wirken, wurde mit der vorliegenden Erfindung erstmals gewagt.

Grundsätzlich ist es vorteilhaft, die Flosse möglichst großflächig, d. h. größtenteils bzw. im Wesentlichen aus Faserverbundwerkstoff herzustellen. Auch ist eine vollständige Herstellung der Flosse aus Faserverbundwerkstoff möglich. Je größer der Anteil von Faserverbundwerkstoff an der Ruderflosse ist, desto stärker wiegen die hierdurch erreichten Vorteile, z. B.:
- Die Lagerung des Ruders kann kleiner dimensioniert werden.
- Die Montage bzw. die Wartung an der Ruderflosse wird vereinfacht.
- Die Herstellung der Flosse sowie deren Anpassung an das Ruderblatt werden vereinfacht.

Bei der vorliegenden Erfindung weist die Flosse einen Flossenkörper auf, der zumindest teilweise aus Faserverbundwerkstoff besteht. Der Flossenkörper ist dabei derart ausgebildet, dass dieser das Grundgerüst bzw. das Skelett der Flosse bildet. Insbesondere sollte der Flossenkörper zweckmäßiger Weise zur Aufnahme der im Betrieb in die Ruderflosse eingeleiteten Kräfte ausgebildet sein. Bevorzugterweise ist der Flossenkörper möglichst weitgehend aus einem Faserverbundwerkstoff hergestellt, so dass der Flossenkörper besonders bevorzugt im Wesentlichen aus einem Faserverbundwerkstoff besteht. Auch ist eine vollständige Ausbildung des Flossenkörpers aus Faserverbundwerkstoff möglich. Je höher der Anteil von Faserverbundwerkstoff am Flossenkörper ist, desto größer ist die erzielte Gewichtsreduzierung, da der Flossenkörper von Ruderflossen herkömmlich normalerweise aus Metall hergestellt ist. Der Flossenkörper ist üblicherweise derart konzipiert, dass er die auf die Ruderflosse wirkenden Kräfte aufnehmen kann. Entsprechend muss dieser eine ausreichende Stabilität bzw. Festigkeit aufweisen, die bei einer Ausbildung aus Faserverbundwerkstoff gegeben ist.

In einer bevorzugten Ausführungsform der Erfindung bildet der Flossenkörper im Wesentlichen vollständig, die Außenoberfläche der Ruderflosse. Somit schließt der Flossenkörper bei dieser Ausbildungsform die Seitenflächen der Ruderflosse, die vordere Vorderleiste, die hintere Endleiste, sowie die oberen und unteren Endbereiche der Ruderflosse ein. Auf die aus Faserverbundmaterial bestehende Oberfläche der Ruderflosse können ggf. noch geeignete, weitere Materialschichten, wie Schutzfarbe oder dergleichen, aufgetragen sein. Der Flossenkörper bildet daher bei dieser Ausführungsform einen im Wesentlichen in sich geschlossenen Grundkörper, der die Ruderflosse bildet.

Insbesondere bei der vorstehend beschriebenen Ausführungsform ist es zweckmäßig, dass der Flossenkörper einen oder mehrere, voneinander getrennte innere Hohlräume bildet. Diese Hohlräume können zweckmäßiger Weise mit einem geeigneten Füllmaterial, insbesondere einem schaumartigen Material wie hoch- und wasserfeste Schäume, ausgefüllt sein. Dadurch muss die Ruderflosse nicht als massiver Körper ausgebildet sein, was weiterhin vorteilhaft für die Gewichtsreduzierung der Ruderflosse ist. Gleichzeitig ist der Flossenkörper jedoch derart ausgebildet, dass eine ausreichende Stabilität bzw. Festigkeit der Ruderflosse gegeben ist. Die Ausfüllung des Hohlraums bzw. der Hohlräume mit einem Füllmaterial dient der weiteren Stützung des Flossenkörpers. Bei diesem Ausführungsbeispiel könnte die Ruderflosse bspw. aus einem Flossenkörper aus faserverstärkten Kunststoff und einem Schaumkern aus einem PU-Schaum oder dergleichen bestehen und würde somit vollständig ohne Bestandteile bzw. Bauteile aus Metall auskommen.

Es ist ferner bevorzugt, dass der Flossenkörper eine vordere, einem Ruderblatt zugekehrte Vorderleiste sowie eine einem Ruderblatt abgekehrte hintere Endleiste umfasst, wobei zwischen den beiden Leisten Versteifungselemente, insbesondere Zwischenböden, angeordnet sind. Auch bei dieser Ausführungsform kann insbesondere die Außenoberfläche der Ruderflosse im Wesentlichen vom Flossenkörper gebildet werden. Die Versteifungselemente dienen zur Aussteifung bzw. zur Erhöhung der Tragfähigkeit der Ruderflosse und können grundsätzlich in jeder geeigneten Form ausgebildet sein. Insbesondere ist es bevorzugt, diese Versteifungselemente als Zwischenböden auszubilden, die vorzugsweise ebenfalls aus Faserverbundwerkstoff hergestellt sind. Diese Zwischenböden unterteilen den inneren Hohlraum des Flossenkörpers in einzelne Unterhohlräume bzw. Untersektionen, die jeweils mit einem Schaumkern versehen werden können. Grundsätzlich ist jedoch auch eine andere Ausbildung der Versteifungselemente, bspw. als Streben oder dergleichen, denkbar.

In einer weiteren bevorzugten Ausführungsform weist die Flosse des Flossenruders ein oder mehrere Aufnahme-/Gelenkelemente auf, die zur Verbindung mit einem Ruderblatt ausgebildet sind. Da die Ruderflosse anlenkbar am Ruderblatt angeordnet ist, muss entsprechend eine schwenkbare Verbindung zwischen Ruderblatt und Ruderflosse sowie eine Anlenkungseinrichtung oder dergleichen vorgesehen sein. Zur flossenseitigen Aufnahme dieser Bauteile bzw. Herstellung der Verbindung sind die Aufnahme-/Gelenkelemente vorgesehen. So kann das Aufnahme-/Gelenkelement zur Aufnahme eines Bauteils der normalerweise am oberen Ruderblattbereich angeordneten Anlenkeinrichtung zur Aufnahme eines Gleitschwenkkolbens ausgebildet sein. Zusätzlich können Aufnahme-/Gelenkelemente Teil einer Scharnierverbindung oder dergleichen zwischen Ruderflosse und Ruderblatt sein, wobei die das Aufnahme-/Gelenkelement in diesem Fall sowohl als Scharnieraufnahme als auch als Scharnier selbst ausgebildet sein kann.

Um eine Verbindung mit dem Ruderblatt zu ermöglichen, ist es zweckmäßig, die Aufnahme-/Gelenkelemente im Bereich der vorderen Vorderleiste der Ruderflosse und/oder im oberen Endbereich der Flosse anzuordnen. Ferner ist es bevorzugt, die Aufnahme-/Gelenkelemente innerhalb des Flossenkörpers der Ruderflosse bzw. integriert in den Flossenkörper auszubilden. Zum einen erleichtert dies vorteilhafterweise den Herstellungsprozess der Ruderflosse, zum anderen wird dadurch sichergestellt, dass sich die Aufnahme-/Gelenkelemente im Bereich der größten Festigkeit der Ruderflosse, nämlich im Flossenkörper, befinden, da typischerweise im Verbindungsbereich zwischen Ruderflosse und Ruderblatt die größten Kräfte auftreten.

Grundsätzlich können die Aufnahme-/Gelenkelemente aus jedem geeigneten Material, insbesondere auch aus Faserverbundwerkstoff oder aus einer Kombination mehrerer, verschiedener Materialien ausgebildet sein. Bevorzugt ist es jedoch, die Aufnahme-/Gelenkelemente aus einem metallischen Material, insbesondere aus Stahl, auszubilden. Da im Bereich der Aufnahme-/Gelenkelemente, wie vorstehend bereits erwähnt, hohe Kräfte auftreten bzw. Stahl als Lagerwerkstoff besonders geeignet ist, ist eine Ausbildung dieser Elemente aus Metall bzw. Stahl vorteilhaft. Grundsätzlich kann jedoch auch jedes andere geeignete, ausreichend feste und verbindungssteife Material verwendet werden. Bei der Ausbildung der Aufnahme-/Gelenkelemente aus Stahl und deren integrativen Anordnung im Flossenkörper wird bei einer Ausbildung des Rests des Flossenkörpers aus Faserverbundmaterial im Rahmen der vorliegenden Erfindung der Flossenkörper weiterhin als im Wesentlichen aus Faserverbundwerkstoff ausgebildet angesehen.

Die Ausbildung der Aufnahme-/Gelenkelemente aus einem Stahlwerkstoff bietet vorteilhafterweise die Möglichkeit, diese vor dem Herstellen des Flossenkörpers auf relativ kleinen Werkzeugmaschinen auf Fertigmaß zu bearbeiten. Die Aufnahme-/Gelenkelemente können über eine geeignete Vorrichtung ausgerichtet werden, um anschließend den Flossenkörper um die Anordnung herum zu fertigen. Damit entfällt das sonst übliche und vergleichsweise umständliche maschinelle Bearbeiten der Aufnahme-/Gelenkelemente nach Fertigstellen eines Flossenkörpers in herkömmlicher Stahlbauweise.

Grundsätzlich können die Aufnahme-/Gelenkelemente jede geeignete Form aufweisen. In einer bevorzugten Ausführungsform sind die Aufnahme-/Gelenkelemente als Rohre bzw. als Verbund mehrerer Rohre ausgebildet. Um diese Rohre herum können bevorzugterweise die Fasern des Faserverbundwerkstoffes zur Herstellung der Ruderflosse gewickelt werden. Die Rohre können dabei als Wickelkern verwendet werden, um den herum zur Herstellung des Flossenkörpers gewickelt wird und der nach Fertigstellung der Wickelung im Bauteil, d. h. im Flossenkörper, verbleibt. Derartige als Rohre ausgebildete Aufnahme-/Gelenkelemente eignen sich insbesondere zur Aufnahme von Gleitschwenkkolben von Anlenkeinrichtungen und/oder zur Aufnahme von Scharnierbolzen von Scharnieren von Ruderblättern. Weiterhin können Sie die Stabilität bzw. Festigkeit des Flossenkörpers bei integrativer Anordnung erhöhen.

Da insbesondere im Verbindungsbereich zwischen Ruderflosse und Ruderblatt im Allgemeinen die höchsten Kräfte auf die Ruderflosse wirken und die Ruderflosse normalerweise im Bereich ihrer vorderen Vorderleiste schwenkbar mit dem Ruderblatt verbunden ist, ist es zweckmäßig, den Flossenkörper im Bereich der Vorderleiste verstärkt auszubilden. Dies kann beispielsweise durch Vorsehung von Verstärkungslagen von Faserverbundmaterial oder einer insgesamt dickeren Ausbildung des Flossenkörpers im Vorderleistenbereich im Vergleich zum übrigen Bereich des Flossenkörpers erreicht werden.

In einer weiteren bevorzugten Ausführungsform weist der Flossenkörper in einer Querschnittsbetrachtung im Bereich der vorderen Nasenleiste eine maximale Länge von 15 bis 50 %, bevorzugt 20 bis 40 % der maximalen Länge der Flosse auf. Es hat sich herausgestellt, dass bei derartigen Längenverhältnissen optimale Ergebnisse im Bezug auf eine ausreichende Stabilität bzw. Festigkeit der Ruderflosse bei gleichzeitig maximaler Gewichtsreduzierung erreicht werden können. Die maximale Länge des Flossenkörpers wird dabei zweckmäßigerweise im Bereich der Schwenkverbindungen der Ruderflosse mit dem Ruderblatt, insbesondere im Bereich der obersten Schwenkverbindung, vorgesehen sein.

Grundsätzlich ermöglicht die Herstellung in Faserverbundbauweise eine einfachere Realisierung komplexer Geometrien bzw. gekrümmter profilierter Oberflächen, als dies in Stahlbauweise möglich ist. Besonders am oberen Endbereich, an dem sich die Anlenkung befindet, lässt sich durch ein geometrisch optimal angepasstes Design gleichzeitig ein hydrodynamisch günstigeres Profil mit weniger Strömungswiderstand realisieren.

Des Weiteren wird die der Erfindung zugrunde liegende Aufgabe durch ein Verfahren zur Herstellung einer Flosse eines Ruders gelöst, bei dem ein Flossenkörper hergestellt wird, der im Wesentlichen aus einem Faserverbundwerkstoff besteht, im Wesentlichen die Außenoberfläche der Flosse bildet und mindestens einen Hohlraum aufweist. Dabei handelt es sich bei dem Ruder erfindungsgemäß um ein Vollschweberuder für das Manövrieren von Schiffen mit hohen Anforderungen bezüglich der Manövrierfähigkeit. Durch die Ausbildung des Flossenkörpers aus Faserverbundmaterial kann eine deutliche Gewichtsreduzierung bei gleichzeitiger Sicherstellung einer ausreichenden Festigkeit der Ruderflosse erreicht werden. Die Vorsehung eines Hohlraums anstelle der Ausbildung eines massiven Körpers trägt weiter zur Gewichtsreduzierung der Ruderflosse bei.

Am Flossenkörper sind ein oder mehrere Aufnahme-/Gelenkelemente vorgesehen , die zur Verbindung mit einem Ruder und/oder zur Aufnahme von Teilen eines Ruders ausgebildet sind. Ferner ist mindestens ein Aufnahme-/Gelenkelement zur Aufnahme eines Bauteils einer Anlenkeinrichtung in einem oberen Flossenendbereich vorgesehen, wobei das mindestens eine Aufnahme-/Gelenkelemente mindestens ein Rohr (92) umfasst, und wobei das mindestens eine Rohr des Aufnahme-/Gelenkelementes zur Aufnahme eines Bauteils einer Anlenkeinrichtung in die Flosse integriert wird. Ferner kann vorzugsweise der mindestens eine Hohlraum mit einem Füllmaterial ausgefüllt sein.

Zur Herstellung des Flossenkörpers, der zumindest größtenteils aus einem Faserverbundwerkstoff besteht, werden erfindungsgemäß zwei Halbschalen hergestellt, die zum Flossenkörper zusammengesetzt werden. Ferner können vorteilhafterweise Versteifungselemente, insbesondere Zwischenböden, hergestellt werden, die vor dem Zusammensetzen zwischen den beiden Halbschalen positioniert und nach dem Zusammensetzen innerhalb der beiden Halbschalen und somit im Hohlraum des Flossenkörpers angeordnet sind. Bei einer alternativen Ausführungsform werden Schaumkerne vorgesehen, um die herum der Flossenkörper aus Faserverbundwerkstoff gewickelt wird. Ebenfalls kann zweckmäßigerweise zusätzlich eine Wicklung um die Aufnahme-/Gelenkelemente herum erfolgen. Alternativ oder zusätzlich können Lagen bzw. Matten aus Faserverbundwerkstoff, insbesondere manuell, auf die Kerne und/oder die Aufnahme-/Gelenkelemente laminiert werden. Im Gegensatz hierzu wird die Faserwicklung im Allgemeinen maschinell durchgeführt. Mit diesem Verfahren können qualitativ hochwertige und insbesondere bei geringen Stückzahlen äußerst wirtschaftliche Flossen bzw. Flossenkörper hergestellt werden, da bei diesem Verfahren keine Anfangsinvestition für Halbschalenformen notwendig ist.

Eine bevorzugte Ausführungsform der Erfindung ist in der Zeichnung dargestellt. Es zeigen schematisch:
- Fig. 1: eine perspektivische Ansicht eines Vollschweberuders mit einer aus dem Stand der Technik bekannten Flosse;
- Fig. 2: eine perspektivische Seitenansicht einer Ruderflosse eines erfindungsgemäßen Flossenruders;
- Fig. 3a: eine Seitenansicht der Ruderflosse aus Fig. 2;
- Fig. 3b: eine Draufsicht auf die Ruderflosse aus Fig. 2;
- Fig. 4a: eine Schnittansicht der Ruderflosse aus Fig. 3b;
- Fig. 4b1: eine Schnittansicht der Ruderflosse aus Fig. 3a;

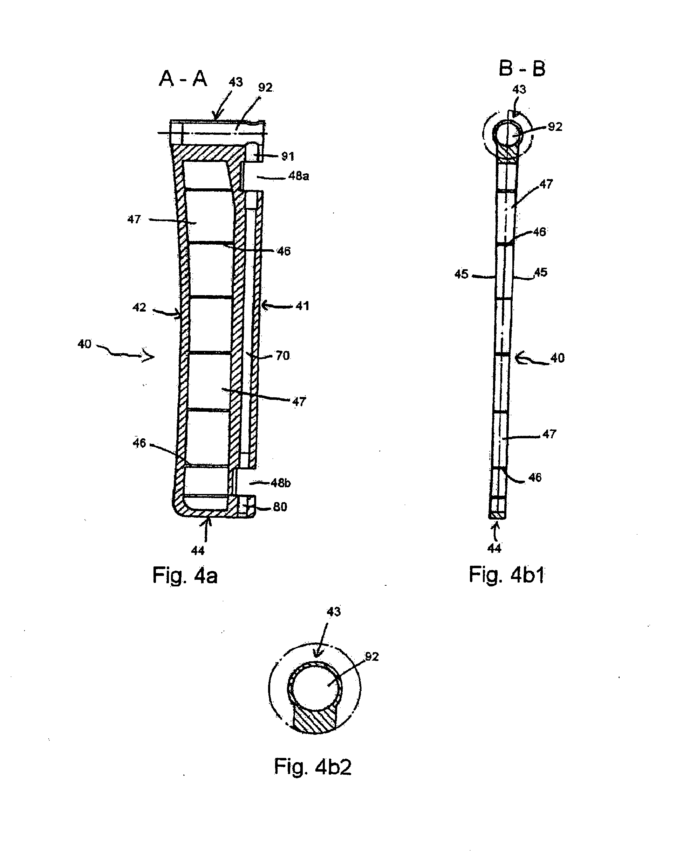

- Fig. 4b2: eine Vergrößerung eines Ausschnitts aus Fig. 4b1;

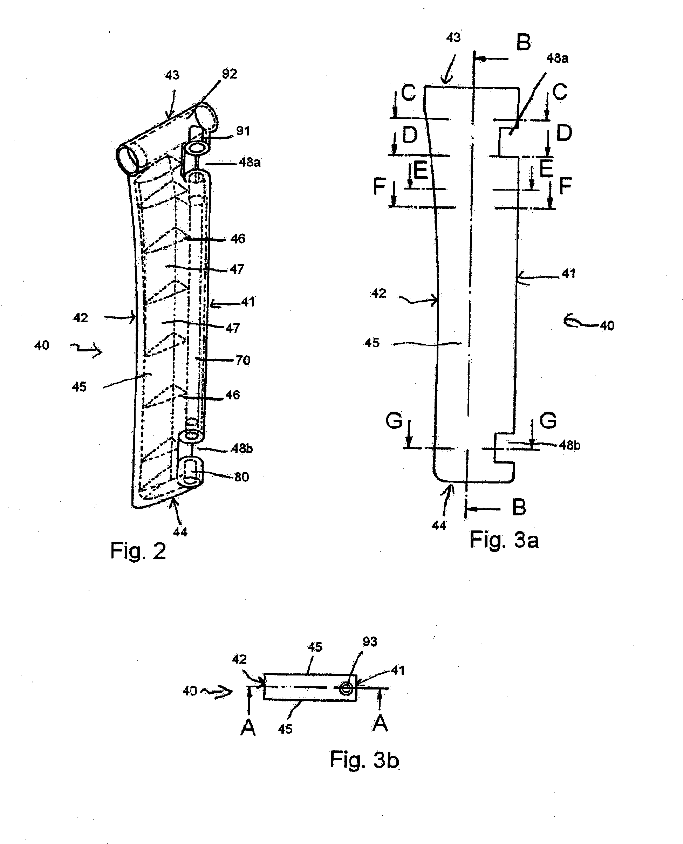

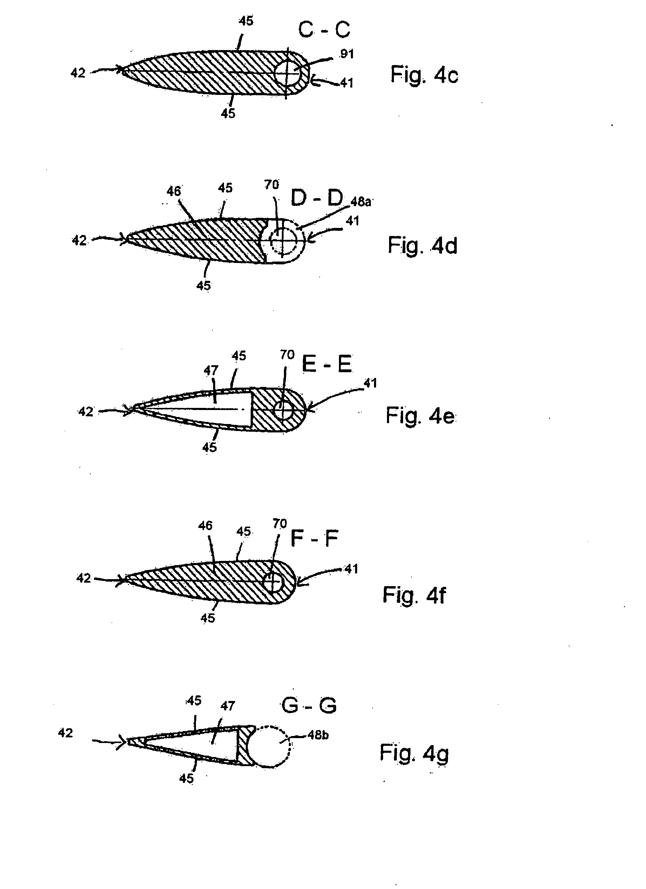

- Fig. 4c: eine weitere Schnittansicht der Ruderflosse aus Fig. 3a;
- Fig. 4d: eine weitere Schnittansicht der Ruderflosse aus Fig. 3a;
- Fig. 4e: eine weitere Schnittansicht der Ruderflosse aus Fig. 3a;
- Fig. 4f: eine weitere Schnittansicht der Ruderflosse aus Fig. 3a;
- Fig. 4g: eine weitere Schnittansicht der Ruderflosse aus Fig. 3a;

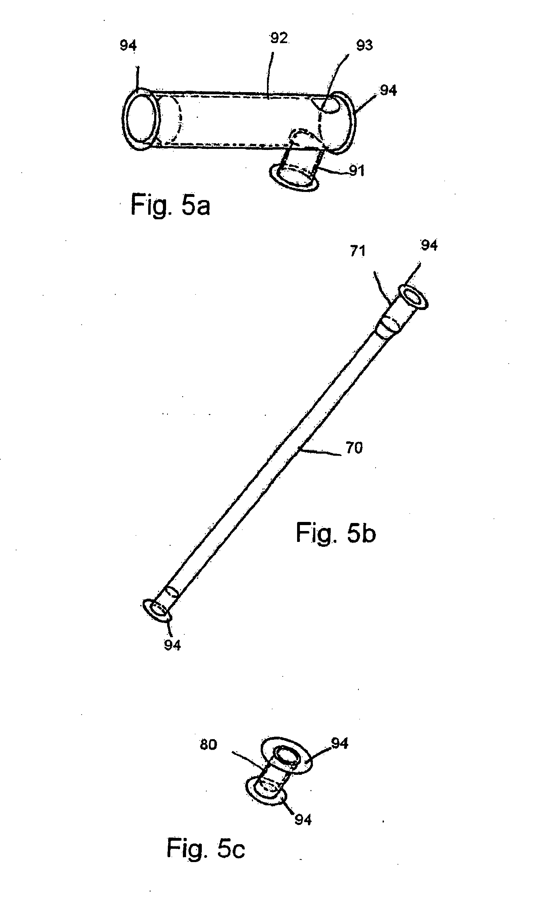

- Fig. 5a: eine perspektivische Darstellung eines Aufnahme-/Gelenkelementes;
- Fig. 5b: eine perspektivische Darstellung eines weiteren Aufnahme-/Gelenkelementes; und
- Fig. 5c: eine perspektivische Darstellung eines weiteren Aufnahme-/Gelenkelementes.

Fig. 2 zeigt eine Flosse 40 eines erfindungsgemäßen Flossenruders 100, die zur schwenkbaren Anlenkung an ein Ruderblatt eines Ruders für Wasserfahrzeuge ausgebildet ist. Durch Strichlinien sind in der Darstellung der Fig. 2 verdeckte bzw. innenliegende Teile der Flosse 40 dargestellt. So umfasst die Flosse 40 eine vordere Vorderleiste 41, eine hintere Endleiste 42, einen oberen Endbereich 43 sowie einen unteren Endbereich 44. Die Flosse 40 wird von einem aus Faserverbundmaterial hergestellten Flossenkörper gebildet, der sämtliches Flossenmaterial im Bereich der Vorderleiste 41, der Endleiste 42, des oberen Endbereichs 43 sowie des unteren Endbereichs 44 umfasst. Darüber hinaus umfasst der Flossenkörper Seitenwände bzw. Seitenflächen 45 sowie mehrere, zwischen den beiden Leisten 41, 42 sowie den Seitenwänden 45 angeordnete Zwischenböden 46. Die Zwischenböden 46 unterteilen den zwischen den Leisten 41, 42 von den beiden Endbereichen 43, 44 sowie den Seitenwandungen 45 des Flossenkörpers angeordneten Hohlraum in mehrere, voneinander getrennte Hohlräume 47. Diese Hohlräume werden vorzugsweise mit einem Schaumkern ausgefüllt (hier nicht dargestellt). Im Bereich der vorderen Vorderleiste 41 der Flosse 40 sind eine obere Ausnehmung 48a sowie eine untere Ausnehmung 48b vorgesehen. Ferner ist zwischen beiden Ausnehmungen 48a, 48b und parallel zur Längsachse der Flosse 40 im Flossenkörper im Bereich der vorderen Vorderleiste 41 ein Stahlrohr 70 vorgesehen. Zwischen unterer Ausnehmung 48b und unterem Endbereich 44 ist im Flossenkörper ein weiteres, längsachsenparalleles Stahlrohr 80 vorgesehen. Oberhalb der oberen Ausnehmung 48a ist ein weiteres, relativ kurzes Stahlrohr 91 vorgesehen, das mit einem weiteren, im Wesentlichen orthogonal hierzu angeordneten, längerem Stahlrohr 92 verbunden ist. Das Stahlrohr 92 verläuft quer zur Längsrichtung der Flosse 40 durch den oberen Endbereich 43 hindurch. Die Stahlrohre 91, 70 und 80 bilden zusammen mit den Ausnehmungen 48a, 48b zwei Aufnahme-/Gelenkelemente zur schwenkbaren Verbindung mit einem Ruderblatt. Insbesondere sind die hier dargestellten, aus Rohren 70, 80, 91 und Ausnehmungen 48a, 48b bestehenden Aufnahme-/Gelenkelemente des Vorderleistenbereichs der Flosse 40 zur Aufnahme von Scharnierbolzen von Scharnieren eines Ruderblattes ausgebildet. Die Scharnierbolzen (hier nicht dargestellt) können jeweils in die zu den Ausnehmungen 48a, 48b hin offenen Endbereiche der Rohre 70, 80, 91 eingeführt werden, während das um die Scharnierbolzen herum angeordnete Scharnierbauteil (hier nicht dargestellt) des Ruderblattes in die jeweilige Ausnehmung 48a, 48b einführbar ist. Sämtliche Rohre 70, 80, 91, 92 sind vollständig innerhalb des Flossenkörpers der Ruderflosse 40 angeordnet bzw. in diesen integriert ausgebildet. Das Rohr 92 ist ein weiteres Aufnahme-/Gelenkelement und zur Aufnahme eines Teils einer Anlenkeinrichtung, insbesondere eines Gleitschwenkkolbens, eines Ruderblattes (hier nicht dargestellt) ausgebildet. Der Kolben kann durch das Rohr 92 hindurchgeführt werden und dient somit zur Zwangsanlenkung der Flosse 40 an ein Ruderblatt eines Ruders für Wasserfahrzeuge. Im Gegensatz zu aus dem Stand der Technik bekannten und bspw. in Fig. 1 dargestellten Flossen, ist das Aufnahme-/Gelenkelement 92 der Ruderflosse 40 in den Flossenkörper der Flosse 40 bzw. in diese integriert ausgebildet und wird nicht wie üblich auf den oberen Endbereich 43 einer Flosse 40 aufgesetzt. Hierdurch vereinfacht sich der Aufbau der Ruderflosse und es müssen keine gesonderten Bauteile an der Flosse 40 installiert werden.

Fig. 3a zeigt eine Seitenansicht der Ruderflosse 40 aus Fig. 2. Fig. 3b zeigt dagegen eine Draufsicht auf dieselbe Flosse 40. Die Fig. 4a bis 4g zeigen verschiedene Schnittdarstellungen der Flosse aus den Fig. 2, 3a und 3b. So zeigt Fig. 4a einen Schnitt entlang der Linie A-A durch die Flosse 40. Sämtliche schraffierten, geschnittenen Flächen in Fig. 4a stellen den aus Faserverbundmaterial hergestellten Flossenkörper der Flosse 40 dar, in den integriert die Rohre 70, 80, 91, 92 der Aufnahme-/Gelenkelemente ausgebildet sind. Die Zwischenböden 46 sind parallel zueinander angeordnet und unterteilen den Innenbereich des Flossenkörpers der Flosse 40 in mehrere, voneinander getrennte Hohlräume 47, die vorzugsweise mit einem Schaumkern ausgefüllt sind. Ferner ist erkennbar, dass die gesamte Flosse aus dem aus Faserverbundmaterial hergestellten Flossenkörper, den in den Flossenkörper integrierten Rohre 70, 80, 91, 92 sowie ggf. den in den Hohlräumen 47 angeordneten Schaumkernen (hier nicht dargestellt) besteht. Ferner ist erkennbar, dass die Vorderleiste 41 im Bereich der oberen Ausnehmung 48a verstärkt, d. h. dicker als im Übrigen Bereich, ausgebildet ist, da hier hohe Belastungen auftreten. Die Außenseite der Vorderleiste 41 ist weitestgehend geradlinig ausgebildet, ebenso wie die Außenseiten des oberen und unteren Endbereichs 43, 44. Die Außenseite der Endleiste 42 weist dagegen einen flachen, bogenförmigen bzw. konvexen Verlauf auf, wobei die größte Breite der Flosse 40 im oberen Endbereich 43 ausgebildet ist. Die Rohre 70, 80, 91 sowie 92 dienen zum Einen zur Aufnahme von Bauteilen eines Ruderblattes. Zum Anderen verstärken sie jedoch auch die jeweiligen Bereiche des Flossenkörpers, in denen sie angeordnet sind, nämlich den Vorderleistenbereich 41 sowie den oberen Endbereich 43.

Fig. 4b1 zeigt einen gegenüber der Schnittebene aus Fig. 4a um 90° gedrehten Schnitt durch die Ruderflosse 40. Die Fig. 4b2 ist eine Vergrößerung des oberen Endbereichs 43 der Fig. 4b1. Es ist erkennbar, dass das Rohr 92 vollständig vom Faserverbundmaterial des Flossenkörpers im oberen Endbereich 43 der Ruderflosse 40 umgeben bzw. ummantelt ist. Somit wird die gesamte Außenoberfläche der Ruderflosse 40 vom aus Faserverbundmaterial gebildeten Flossenkörper gebildet.

Die Fig. 4c bis 4g zeigen dagegen verschiedene Querschnittsdarstellungen der Ruderflosse aus den Fig. 2, 3a bzw. 3b. Fig. 4c zeigt eine Querschnittsansicht durch die Ruderflosse 40 im Bereich zwischen dem Rohr 92 und dem obersten Hohlraum 47. Somit führt der Querschnitt entlang der Schnittlinie C-C vollflächig durch den Flossenkörper. Entsprechend zeigt Fig. 4c eine vollflächige Fläche aus Faserverbundmaterial, die einzig durch die Ausnehmung des Rohres 91 unterbrochen ist. Von der Vorderleiste 41 erweitert sich das Profil der Flosse halbkreisförmig zu einem Bereich der größten Profilbreite, der auf Höhe des Rohres 91 angeordnet ist. Von da verlaufen die Wandungen 45 in etwa parallel bis sie sich nach etwas mehr als der Hälfte der Länge der Ruderflosse bogenförmig bis zu einer Endleiste 42 hin verjüngen.

Die Fig. 4d zeigt einen Schnitt durch einen Zwischenboden 46, der in Längsrichtung gesehen hinter der Ausnehmung 48a angeordnet ist. Es ist erkennbar, dass der Zwischenboden 46 integriert in die Wandungen 45 und die Endleiste 42 ausgebildet ist.

Fig. 4e zeigt eine weitere Querschnittsansicht, die durch einen Hohlraum 47 verläuft. Es ist erkennbar, dass die Länge des aus Faserverbundmaterial hergestellten vorderen Endbereichs 41 etwa 1/3 der Gesamtlänge der Ruderflosse beträgt. Der Hohlraum 47 ist in etwa dreiecksförmig ausgebildet, wobei die beiden langen Schenkel bogenförmig verlaufen.

Fig. 4f zeigt einen weiteren Schnitt durch einen Zwischenboden 46 und Fig. 4g zeigt einen Schnitt durch einen Hohlraum 47 und die Ausnehmung 48b.

Die Fig. 5a, 5b und 5c zeigen perspektivische Detailansichten der in der Flosse 40 integriert angeordneten Rohre 70, 80, 91, 92. Das Rohr 70 weist einen oberen Endbereich 71 auf, der im Bereich der Ausnehmung 48a angeordnet ist und gegenüber dem restlichen Rohr 70 einen größeren Durchmesser aufweist. Dieser größere Durchmesser dient zum einen der Verstärkung des oberen Endbereichs 71 sowie zur Anpassung an die Aufnahme eines Scharnierbolzens und eines Scharniers eines Ruderblattes (hier nicht dargestellt) in der Funktionsweise einer Lagerschale für den Scharnierbolzen. Die Rohre 91 und 92 sind miteinander unter Ausbildung eines annähernd rechten Winkels, insbesondere mittels Verschweißung, verbunden, wobei gegenüberliegend des Rohres 91 im Rohr 92 eine Öffnung 93 vorgesehen ist. Sämtliche Rohre 70, 80, 91, 92 weisen an ihren offenen Enden scheibenartige Abschlussstücke 94 auf, die auf dem Faserverbundmaterial des Flossenkörpers der Flosse 40 zum Aufliegen kommen. Die in den Fig. 5a bis 5c dargestellten Stahlrohrkonstruktionen können auch als "Inlets" bezeichnet werden.

### Bezugszeichenliste

- 100: Flossenruder
- 10: Anlenkeinrichtung
- 12: Lagergehäuse
- 14: Scharnierbolzen
- 16: Lagergehäuse
- 20: Ruderblatt
- 21: Ruderschaft
- 22: Endleiste Ruderblatt
- 30: Flosse eines Flossenruders aus dem Stand der Technik
- 40: Flosse eines erfindungsgemäßen Flossenruders
- 41: Vorderleiste
- 42: Endleiste
- 43: oberer Endbereich
- 44: unterer Endbereich
- 45: Seitenwandung
- 46: Zwischenboden
- 47: Hohlräume
- 48a,b: Ausnehmung
- 70: Stahlrohr
- 71: oberer Endbereich
- 80: Stahlrohr
- 91: Stahlrohr
- 92: Stahlrohr
- 93: Öffnung
- 94: Abschlussstücke

## Patentansprüche

1. Ruder (100) für das Manövrieren von Schiffen mit hohen Anforderungen bezüglich der Manövrierfähigkeit, umfassend ein Ruderblatt (20) und eine Flosse (40),
**dadurch gekennzeichnet,**
**dass** die Flosse (40) einen Flossenkörper umfasst, der zumindest teilweise aus biegesteifen Faserverbundwerkstoff besteht und der zumindest größtenteils die Außenoberfläche der Flosse (40) bildet, wobei die Flosse (40) mittels einer Anlenkeinrichtung (10) an dem Ruderblatt (20) angelenkt angeordnet ist, wobei die Flosse (40) in einem oberen Flossenendbereich (43) mindestens ein Aufnahme-/Gelenkelement zur Aufnahme eines Bauteils der Anlenkeinrichtung (10) umfasst, und wobei das mindestens eine Aufnahme-/Gelenkelemente mindestens ein Rohr (92) umfasst, um welches herum der Faserverbundwerkstoff gewickelt und/oder laminiert ist.

2. Ruder gemäß Anspruch 1,
**dadurch gekennzeichnet,**
**dass** die Anlenkeinrichtung (10) einen Gleitschwenkkolben umfasst, und dass der Gleitschwenkkolben mit dem mindestens einen Aufnahme-/Gelenkelement der Flosse (40) verbunden ist und/oder in das mindestens eine Aufnahme-/Gelenkelement der Flosse (40) eingeführt ist.

3. Ruder gemäß Anspruch 1 oder 2,
**dadurch gekennzeichnet,**
**dass** der Flossenkörper einen oder mehrere, voneinander getrennte innere Hohlräume (47) aufweist, die bevorzugt mit einem Füllmaterial, insbesondere einem schaumartigen Material, ausgefüllt sind.

4. Ruder gemäß einem der Ansprüche 1 bis 3,
**dadurch gekennzeichnet,**
**dass** der Flossenkörper eine vordere, dem Ruderblatt (20) zugekehrte Vorderleiste (41), eine hintere, dem Ruderblatt (20) abgekehrte Endleiste (42) und zwischen beiden Leisten angeordnete Versteifungselemente, insbesondere Zwischenböden (46), umfasst.

5. Ruder gemäß einem der Ansprüche 1 bis 4,
**dadurch gekennzeichnet,**
**dass** der Flossenkörper im Bereich der vorderen, dem Ruderblatt (20) zugekehrten Vorderleiste (41) verstärkt ausgebildet ist.

6. Ruder gemäß einem der Ansprüche 1 bis 5,
**dadurch gekennzeichnet,**
**dass** in einer Querschnittsbetrachtung der Flossenkörper im Bereich der vorderen Vorderleiste (41) eine maximale Länge von 15-50 % der maximalen Länge der Flosse (40) aufweist.

7. Ruder gemäß einem der vorhergehenden Ansprüche,
**dadurch gekennzeichnet,**
**dass** die Flosse (40) mindestens ein Aufnahme-/Gelenkelement zur Verbindung mit dem Ruderblatt (20) umfasst, das vorzugsweise im Bereich der dem Ruderblatt (20) zugekehrten vorderen Vorderleiste (41) und/oder im oberen Flossenendbereich (43) angeordnet ist.

8. Ruder nach einem der vorhergehenden Ansprüche,
**dadurch gekennzeichnet,**
**dass** das mindestens eine Aufnahme-/Gelenkelement aus einem oder mehreren metallischen Materialien, insbesondere aus Stahl, besteht.

9. Ruder gemäß Anspruch 7 oder 8,
**dadurch gekennzeichnet,**
**dass** mindestens ein weiteres Aufnahme-/Gelenkelement ein oder mehrere Rohre (70, 80, 91) umfasst, um die herum der Faserverbundwerkstoff gewickelt und/oder laminiert ist.

10. Ruder gemäß einem der Ansprüche 7 bis 9,
**dadurch gekennzeichnet,**
**dass** ein Teil eines am Ruderblatt (20) angeordneten, zur schwenkbaren Anbindung der Flosse (40) ans Ruderblatt (20) ausgebildeten Scharniers mit dem mindestens einen Aufnahme-/Gelenkelement der Flosse (40) verbunden und/oder in das mindestens eine Aufnahme-/Gelenkelement der Flosse (40) eingeführt ist.

11. Verfahren zur Herstellung einer Flosse (40) eines Ruders (100)
**dadurch gekennzeichnet,**
**dass** ein Flossenkörper zumindest im Wesentlichen aus Faserverbundwerkstoff hergestellt wird, der zumindest im Wesentlichen die Außenfläche der Flosse (40) bildet und mindestens einen Hohlraum (47) aufweist, dass in und/oder an dem Flossenkörper ein oder mehrere Aufnahme-/Gelenkelemente zur Verbindung mit einem Ruderblatt (20) vorgesehen werden,
**dass** mindestens ein Aufnahme-/Gelenkelement zur Aufnahme eines Bauteils einer Anlenkeinrichtung (10) in einem oberen Flossenendbereich (43) vorgesehen wird, wobei das mindestens eine Aufnahme-/Gelenkelemente mindestens ein Rohr (92) umfasst,
**dass** das mindestens eine Rohr (92) des Aufnahme-/Gelenkelementes zur Aufnahme eines Bauteils einer Anlenkeinrichtung (10) in die Flosse (40) integriert wird, und
**dass** gegebenenfalls der mindestens eine Hohlraum (47) mit einem Füllmaterial ausgefüllt wird, wobei
zur Herstellung des Flossenkörpers zwei Halbschalen und gegebenenfalls zwischen den Halbschalen anzuordnende Versteifungselemente hergestellt und zum Flossenkörper zusammengesetzt werden,
wobei das Ruder als Vollschweberuder für das Manövrieren von Schiffen mit hohen Anforderungen bezüglich der Manövrierfähigkeit ausgebildet ist.

12. Verfahren gemäß Anspruch 11,
**dadurch gekennzeichnet,**
**dass** zur Herstellung des Flossenkörpers ein oder mehrere Kerne, insbesondere Schaumkerne, und/oder ein oder mehrere Aufnahme-/Gelenkelemente vorgesehen werden, um die herum Faserverbundwerkstoff gewickelt und/oder laminiert wird.

## Claims

1. A rudder (100) for the manoeuvring of ships with high demands with respect to manoeuvrability, comprising a rudder blade (20) and a fin (40), **characterized in that** the fin (40) comprises a fin body which consists at least partially of rigid fibre-composite material and which at least largely forms the outer surface of the fin (40), wherein the fin (40) is disposed in an articulated manner on the rudder blade (20) by means of an articulation device (10), wherein in an upper fin end area (43) the fin (40) comprises at least one receiving/joint element for receiving a component of the articulation device (10), and wherein the at least one receiving/joint elements comprise at least one tube (92) around which the fibre-composite material is wound and/or laminated.

2. The rudder according to claim 1, **characterized in that** the articulation device (10) comprises a sliding pivoting piston and that the sliding pivoting piston is connected to the at least one receiving/joint element of the fin (40) and/or is inserted into the at least one receiving/joint element of the fin (40).

3. The rudder according to claims 1 or 2, **characterized in that** the fin body has one or more separated inner hollow areas (47), which are preferably filled with a filler material, in particular a foam filler material.

4. The rudder according to any one of claims 1 to 3, **characterized in that** the fin body comprises a front leading edge (41) facing the rudder blade (20), a rear trailing edge (42) facing away from the rudder blade (20), and stiffening elements, in particular, intermediate floors (46), arranged between both edges.

5. The rudder according to any one of claims 1 to 4, **characterized in that** the fin body is designed in a reinforced manner in the area of the front leading edge (41) facing the rudder blade (20).

6. The rudder according to any one of claims 1 to 5, **characterized in that** in a cross-sectional view the fin body in the area of the front leading edge (41) has a maximum length of 15%-50% of the maximum length of the fin (40).

7. The rudder according to any one of the preceding claims, **characterized in that** the fin (40) comprises at least one receiving/joint element for connection with the rudder blade (20), which is preferably arranged in the area of the front leading edge (41) facing the rudder blade (20) and/or in the upper fin end area (43).

8. The rudder according to any one of the preceding claims, **characterized in that** the at least one receiving/joint element consists of one or more metallic materials, in particular of steel.

9. The rudder according to claims 7 or 8, **characterized in that** at least one further receiving/joint element comprises one or more tubes (70, 80, 91), around which the fiber-composite material is wound and/or laminated.

10. The rudder according to any one of claims 7 to 9, **characterized in that** a part of a hinge arranged on the rudder blade (20) and designed for the pivotable connection of the fin (40) on the rudder blade (20) is connected with the at least one receiving/joint element of the fin (40) and/or is inserted into the at least one receiving/joint element of the fin (40).

11. A method for the production of a fin (40) of a rudder (100), **characterized in that** a fin body is made at least substantially of fibre-composite material, which forms at least substantially the outer surface of the fin (40) and has at least one hollow area (47), that one or more receiving/joint elements are provided in and/or on the fin body for connection with a rudder blade (20), that at least one receiving/joint element is provided for receiving a component of an articulation device (10) in an upper fin end area (43), wherein the at least one receiving/joint element comprises at least one tube (92), that the at least one tube (92) of the receiving/joint element for receiving a component of an articulation device (10) is integrated in the fin (40) and that optionally the at least one hollow area (47) is filled with a filler material, wherein for the production of the fin body two half shells and optionally stiffening elements to be arranged between the half shells are produced and combined to form the fin body, wherein the rudder is configured as a full spade rudder for the manoeuvring of ships with high demands with respect to manoeuvrability.

12. The method according to claim 11, **characterized in that** for the production of the fin body one or more cores, in particular foam cores, and/or one or more receiving/joint elements are provided, around which fibre-composite material is wound and/or laminated.

## Revendications

1. Gouvernail (100) pour la manoeuvre de navires ayant de hautes exigences par rapport à la capacité de manoeuvre, comprenant un safran (20) et un aileron (40), **caractérisé en ce que** l'aileron (40) comprend un corps d'aileron qui est composé au moins partiellement de matériau de fibres composites résistant à la flexion et qui forme au moins en grande partie la surface extérieure de l'aileron (40), sachant que l'aileron (40) est disposé articulé sur le safran (20) au moyen d'un dispositif d'articulation (10), sachant que l'aileron (40) comprend dans une partie d'extrémité supérieure d'aileron (43), au moins un élément de réception/articulation pour recevoir une pièce du dispositif d'articulation (10), et sachant que l'au moins un élément de réception/articulation comprend au moins un tube (92) autour duquel le matériau de fibres composites est enroulé et/ou laminé.

2. Gouvernail selon la revendication 1, **caractérisé en ce que** le dispositif d'articulation (10) comprend un piston oscillant coulissant et que le piston oscillant coulissant est relié à l'au moins un élément de réception/articulation de l'aileron (40) et/ou est introduit dans l'au moins un élément de réception/articulation de l'aileron (40).

3. Gouvernail selon la revendication 1 ou 2, **caractérisé en ce que** le corps d'aileron présente un ou plusieurs espace(s) creux (47) séparés les uns des autres, qui sont remplis de préférence d'un matériau de remplissage, en particulier d'un matériau de type mousse.

4. Gouvernail selon l'une des revendications 1 à 3, **caractérisé en ce que** le corps d'aileron présente une baguette avant (41) frontale tournée vers le safran (20), une baguette d'extrémité (42) arrière détournée du safran (20) et des éléments de renfort, en particulier des fonds intermédiaires (46), disposés entre les deux baguettes.

5. Gouvernail selon l'une des revendications 1 à 4, **caractérisé en ce que** le corps d'aileron est conçu renforcé au niveau de la baguette avant (41) frontale tournée vers le safran (20).

6. Gouvernail selon l'une des revendications 1 à 5, **caractérisé en ce que** vu en section transversale, le corps d'aileron présente au niveau de la baguette avant (41) frontale une longueur maximale de 15-50 % de la longueur maximale de l'aileron (40).

7. ouvernail selon l'une des revendications précédentes, **caractérisé en ce que** l'aileron (40) comprend au moins un élément de réception/articulation pour la liaison avec le safran (20), qui est disposé de préférence au niveau de la baguette avant (41) frontale tournée vers le safran (20) et/ou dans la partie d'extrémité supérieure d'aileron (43).

8. Gouvernail selon l'une des revendications précédentes, **caractérisé en ce que** l'au moins un élément de réception/articulation est composé d'un matériau métallique ou de plusieurs matériaux métalliques, en particulier d'acier.

9. Gouvernail selon la revendication 7 ou 8, **caractérisé en ce qu'**au moins un élément de réception/articulation supplémentaire comprend un ou plusieurs tube(s) (70, 80, 91) autour duquel/desquels le matériau de fibres composites est enroulé et/ou laminé.

10. Gouvernail selon l'une des revendications 7 à 9, **caractérisé en ce qu'**une partie d'une charnière disposée sur le safran, formée pour une liaison pivotante de l'aileron (40) sur le safran (20), est reliée à l'au moins un élément de réception/articulation de l'aileron (40) et/ou est introduite dans l'au moins un élément de réception/articulation de l'aileron (40).

11. Procédé de fabrication d'un aileron (40) d'un gouvernail (100), **caractérisé en ce qu'**un corps d'aileron est fabriqué au moins essentiellement d'un matériau de fibres composites, qui forme au moins essentiellement la surface extérieure de l'aileron (40) et présente au moins un espace creux (47), qu'un ou plusieurs élément(s) de réception/articulation pour la liaison avec un safran (20) est/sont prévu(s) dans et/ou sur le corps d'aileron, qu'au moins un élément de réception/articulation pour recevoir une pièce d'un dispositif d'articulation (10) est prévu dans une partie d'extrémité supérieure d'aileron (43), sachant que l'au moins un élément de réception/articulation comprend au moins un tube (92), que l'au moins un tube (92) de l'élément de réception/articulation est intégré dans l'aileron (40) pour recevoir une pièce d'un dispositif d'articulation (10), et que le cas échéant, l'au moins un espace creux (47) est rempli d'un matériau de remplissage, sachant que pour fabriquer le corps d'aileron, deux demi-coques et le cas échéant des éléments de renfort à agencer entre les demi-coques sont fabriqués et réunis en le corps d'aileron, sachant que le gouvernail est conçu en tant que gouvernail à suspension totale pour la manoeuvre de navires ayant de hautes exigences par rapport à la capacité de manoeuvre.

12. Procédé selon la revendication 11, **caractérisé en ce que** pour fabriquer le corps d'aileron, un ou plusieurs noyau(x), en particulier des noyaux de mousse, et/ou un ou plusieurs élément(s) de réception/articulation est/sont prévu(s) autour duquel/desquels le matériau de fibres composites est enroulé et/ou laminé.
